# EUROPEAN PATENT APPLICATION

(11) **EP 2 503 703 A1**
(43) Date of publication of application: **26.09.2012**
(21) Application number: 11001594.8
(22) Date of filing: 25.02.2011
(51) Int. Cl.: H04B 1/52

(54) **Technique for radio transceiver adaptation**

(71) Applicant: Telefonaktiebolaget LM Ericsson (publ), 164 83 Stockholm (SE)
(72) Inventor: Andersson, Martin, 224 71 Lund (SE); Din ud, Imad, 226 42 Lund (SE); Sjöland, Henrik, 246 51 Löddeköpinge (SE)
(74) Representative: Röthinger, Rainer

(57) **Abstract**

A technique for adjusting a transceiver capable of operating in compliance with at least one radio communication standard and comprising at least one RF transmitter and at least one RF receiver is disclosed. The technique comprises determining, when the RF transmitter transmits a signal, the amount of signal power leakage from the RF transmitter into the RF receiver, and adjusting, when RF transmitter is configured to transmit in a specific frequency range, one or more parameters of the RF receiver so as to fulfil a receiver requirement as defined in the radio communication standard. The adjustment is at least partially based on the signal power leakage determined for the specific frequency range.

## Description

### Technical Field

The present disclosure generally relates to radio communication and in particular to a technique for adapting a radio frequency (RF) transceiver so as to optimize its performance.

### Background

Transceivers for radio communication systems, such as cellular radio equipment and other types of communication devices, are subject to large variations in the radio conditions. This is due to, among others, the typical non-line-of-sight communication, the changing distance between the transceiver and the base station the transceiver is communicating with, as well as the presence of other transceiver(s) and/or base station(s) operating in the same frequency range. The variations often manifest themselves as varying strengths and/or positions of the interfering signals and varying strengths of the desired signals.

As the evolution of radio communication standards strives towards ever increasing throughput by employing novel techniques such as higher order modulation, bandwidth extension, multi-antennas, new coding schemes, etc., the power consumption of the communication devices increases accordingly. This is particularly harmful for the radio transceiver of a communication device having a limited battery capacity, for example, a user equipment (UE) of a cellular telecommunication system.

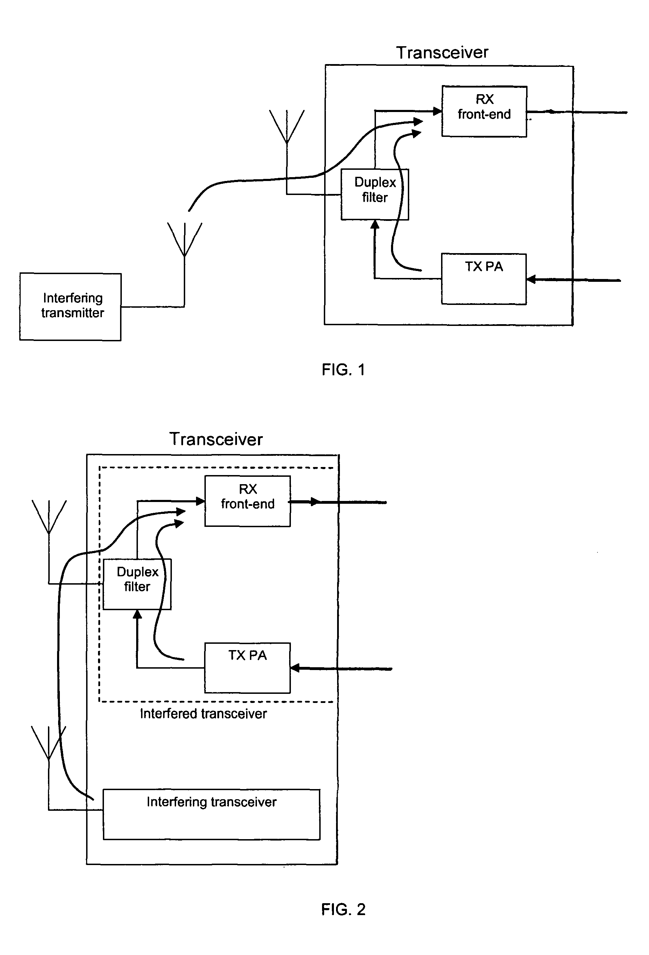

A common problem for radio transceivers with concurrent reception and transmission capabilities are inter-modulation products generated in the receiver (RX) between the transmitter (TX) signal and an interfering signal. As exemplified in Fig. 1 and Fig. 2, a transmitted signal partly leaks through a duplex filter, also known as a duplexer, to a receiver input. In Fig. 1 the interfering signal originates from an external transmitter whereas in Fig. 2 the interfering signal is generated by another transceiver co-located in the communication device.

In addition to the above scenario, it may happen that there exists in the surroundings of the communication device (referred to as the first communication device) yet another radio transceiver, either external, e.g., a second communication device, or co-located, e.g., a WLAN or Bluetooth transceiver, which generates an interfering TX signal which can be picked up by the first communication device's antenna and leaks through the duplex filter into the first communication device's receiver. When both the TX signal and the interfering signal are strong, the inter-modulation products resulting from the limited linearity of the receiver that fall into the desired RX band may reduce the signal-noise-ratio (SNR) of the received signal.

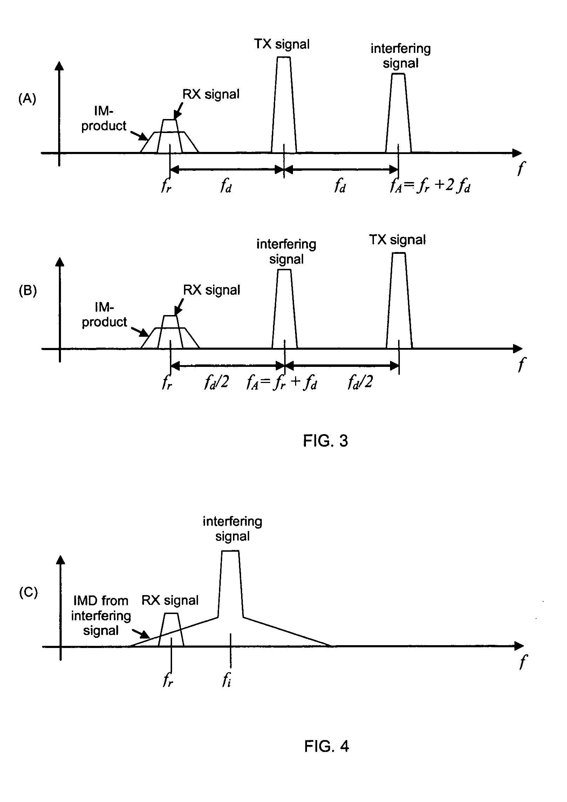

Two cases where the above may happen are illustrated in Fig. 3, Scenarios A and B. Scenario A shows the case where the interfering signal is located at the other side of the TX signal (with respect to the RX signal) at a frequency distance equal to the duplex distance f_{d} from the TX signal. Scenario B shows the case where the interfering signal is located between the TX and RX signals. In both cases, the TX signal and the interfering signal are positioned such that their inter-modulation products appear in the RX band.

Another scenario, C, is illustrated in Fig. 4, which shows that the interfering transmitter is so close to the RX signal that the inter-modulation distortion in the radio receiver due to the interfering signal will fall into the desired RX band. The strongest interference of this kind typically comes from the TX signal when either the duplex distance is very small or the transmitter interference is close to the -1 dB compression point of the receiver.

There exists yet another scenario, D, (not shown in the drawings) related to the power of the TX signal. In this scenario, the cross-modulation between the TX signal and the RX local oscillator (LO) signal leaks to the low noise amplifier (LNA) input of the receiver.

The above scenarios A-D typically set the receiver linearity requirements. The receiver should be designed to cope with the worst-case scenarios, which will result in substantial power consumption.

A transceiver designed with fixed parameters to cope with the worst-case scenarios as discussed above will have a fixed linearity performance, and therefore also a power consumption that is unnecessarily high in most cases since these worst-case scenarios are unlikely to occur in the normal operation of the transceiver.

### Summary

There is a need for a technique to adapt a transceiver to better-than-worst-case conditions and, optionally, reduce its power consumption accordingly.

According to one aspect, a method is provided for adjusting (e.g., calibrating) a transceiver comprising at least one Radio Frequency (RF), transmitter and at least one RF receiver. The transceiver is capable of operating in compliance with at least one radio communication standard. Relevant radio communication standards include, but are not limited to, 3GPP HSPA, 3GPP LTE, W-CDMA, CDMA2000, WLAN, Bluetooth, and any extension or further development thereof.

The method comprises determining, when the RF transmitter transmits a signal, an amount of signal power leakage from the RF transmitter into the RF receiver, and adjusting, when the RF transmitter is configured to transmit in a specific frequency range, one or more parameters of the RF receiver so as to fulfil a receiver requirement defined in the radio communication standard. The adjustment is may at least partially be based on the signal power leakage determined for the specific frequency range. In the context of the present disclosure, a frequency range can be a frequency band, a plurality of frequency bands, a channel, or a plurality of channels.

The receiver requirement denotes, or encompasses, one or more properties, or parameters, of the receiver; for example, power consumption, receiver linearity, noise level, gain for an undesired signal, gain for a desired signal, etc. The receiver requirement may be a performance requirement that denotes, for example, a minimum power consumption, a minimum receiver linearity, a minimum noise level, a maximum gain for an undesired signal, a minimum gain for a desired signal, etc.

The RF transmitter may be capable of transmitting the signal in a plurality of frequency ranges. Accordingly, the determination of the signal power leakage as well as that of the receiver-parameter adjustment may be performed with respect to each frequency range.

The transceiver may further comprise a duplex filter, or duplexer, having at least three ports, one port connected to the antenna, one port connected to the RF transmitter and the third port connected to the RF receiver. In this case, the determination of the signal power leakage may comprise determining a relationship between (e.g., the power or amplitude of) a first signal at the port of the duplex filter connected to the RF transmitter and (e.g., the power or amplitude of) a second signal at the port of duplex filter connected to the RF receiver.

The signal power leakage may be determined by a separate measurement receiver comprised in the transceiver. The measurement receiver may be tuned to the frequency range of the RF transmitter, and the duplex filter outputs the signal received thereat to the measurement receiver for measuring the signal power leakage.

The signal power leakage may also be determined by using a transmitter local oscillator signal as a frequency reference for driving a mixer comprised in the RF receiver. The RF receiver itself may then measure the signal power leakage. The signal power leakage may be determined by measuring an in-band power of the signal at an output port of the RF receiver.

The signal power leakage may be repeatedly determined. It may be repeatedly determined under different operating conditions. Alternatively, or in addition, it may be repeatedly determined over time. In certain cases, the determination of the amount of the signal power leakage is performed less frequently than the adjustment step. For example, the adjustment step may regularly be performed during operation of the transceiver, while the determination step is performed only a single time.

The method may further comprise a step of storing, in a storage, the amount value of the signal power leakage determined. The adjustment step may further comprise determining the one or more parameters of the RF receiver based on the stored value of the amount of the signal power leakage. This may be done by, e.g., looking up in the storage.

The determination of the signal power leakage may be performed when the RF receiver is in an idle state, upon manufacturing of the transceiver, in a self-test mode of the transceiver, or upon first use of the transceiver. The adjustment may be performed upon a change of the specific frequency range in which the RF transmitter transmits the signal.

The adjustment may relate to, or adjust, various components of the RF receiver, which include at least one of a low-noise amplifier, a mixer, a filter, and an analog-to-digital converter. The adjustment may affect numerous characteristics of the RF receiver such as linearity, noise, gain, and dynamic range.

The amount of the signal power leakage may be determined by measuring a power or amplitude of the leaking signal. The method may be performed to compensate for a manufacturing tolerance of a duplex filter comprised in the transceiver and connected to both the RF transmitter and the RF receiver.

According to another aspect, a transceiver capable of operating in compliance with at least one radio communication standard and comprising at least one RF transmitter and at least one RF receiver is provided. The transceiver is configured to determine, when the RF transmitter transmits a signal, an amount of signal power leakage from the RF transmitter into the RF receiver. The transceiver is further configured to adjust, when the RF transmitter is configured to transmit in a specific frequency range, one or more parameters of the RF receiver so as to fulfil a receiver requirement defined in the radio communication standard. The transceiver is configured to perform the adjustment at least partially based on the signal power leakage determined for the specific frequency range.

The RF transmitter may be configured to transmit in a plurality of frequency ranges and, in this case, the transceiver may be configured to perform the determination and adjustment steps with respect to each frequency range.

The transceiver may further comprise a duplex filter with ports connected to the RF transmitter and the RF receiver, respectively. With this implementation, the transceiver may be configured to determine the signal power leakage by determining a relationship between a first signal at the port of the duplex filter connected to the RF transmitter and a second signal at the port of the duplex filter connected to the RF receiver.

The transceiver may further comprise a measurement receiver specifically configured to determine the signal power leakage. Moreover, the RF receiver of the transceiver may comprise at least one of a low-noise-amplifier, a mixer, a filter, and an analog-to-digital converter, wherein the transceiver may be further configured to perform the adjustment by adjusting at least one of the above components.

The technique presented herein may be implemented in the form of hardware, software, or as a combined hardware/software solution. As for a software aspect, a computer program product is provided which comprises program code portions for performing the steps of any of the methods and method aspects presented herein when the computer program product is executed on a computing device. The computer program product may be stored on a computer-readable recording medium. The computer-readable recording medium may be a permanent memory or a rewriteable memory, CD-ROM, or DVD. The computer program product may also be provided for download via a communication network such as the Internet, a cellular communication network, or a wireless or wired Local Area Network (LAN).

Further provided in the present disclosure is a user equipment comprising the transceiver presented herein. The user equipment may be a mobile telephone, a smart phone, a network or data card, a notebook computer, and so on. Moreover, the user equipment may be configured to operate according to at least one of the following radio standards: 3GPP HSPA, 3GPP LTE, W-CDMA, CDMA2000, WLAN, Bluetooth, and any extension or future development thereof. Of course, other relevant radio standards may be applicable as well.

### Brief Description of the Drawings

In the following, the technique presented herein will be described in more detail with reference to exemplary embodiments illustrated in the drawings, wherein
- Fig. 1: is a block diagram showing an external interferer configuration addressed by the technique presented herein;
- Fig. 2: is a block diagram showing a co-located interferer configuration addressed by the technique presented herein;
- Fig. 3: is a schematic frequency diagram showing two scenarios A and B with TX signal and interfering signal positioned so that an inter-modulation product appears in the receiver band;
- Fig. 4: is a schematic frequency diagram showing another scenario C where inter-modulation distortion of a strong interfering signal falls into the receiver band (a strong interfering signal is sometimes termed as a "blocker". The strongest interference of this kind typically comes from the TX signal itself);
- Fig. 5: is a block diagram showing a transceiver embodiment of the technique;

- Fig. 6: is a block diagram showing another transceiver embodiment of the technique;
- Fig. 7: is a flow chart showing a method embodiment of the technique;
- Fig. 8: is a flow chart showing another method embodiment of the technique;
- Fig. 9: is a flow chart showing a further method embodiment of the technique;
- Fig. 10: is a block diagram showing another transceiver embodiment of the technique which measures the duplex filter TX-to-RX attenuation with a measurement receiver (mRX chain);
- Fig. 11: is a block diagram showing a further transceiver embodiment of the technique which measures the duplex filter TX-to-RX and LNA attenuation using the existing receiver chain within the RF mixer driven by the TX local oscillator; and
- Fig. 12: is a block diagram showing a user equipment embodiment of the technique.

### Detailed Description

In the following description, for purposes of explanation and not limitation, specific details are set forth, such as specific transceiver configurations and specific signal-flow scenarios, in order to provide a thorough understanding of the technique presented herein. It will be apparent to one skilled in the art that the technique may be practiced in other embodiments which depart from these specific details.

Those skilled in the art will further appreciate that the methods, steps and functions explained herein may be implemented using individual hardware circuitry, software functioning in conjunction with a programmed microprocessor or a general purpose computer, using an Application Specific Integrated Circuit (ASIC) and/or using one or more Digital Signal Processors (DSP). It will also be appreciated that while the following embodiments are primarily described in the form of methods and apparatus, the technique presented herein may also be embodied in a computer processor and a memory coupled to the processor, wherein the memory stores one or more programs that perform the steps of the methods discussed herein when executed by the processor.

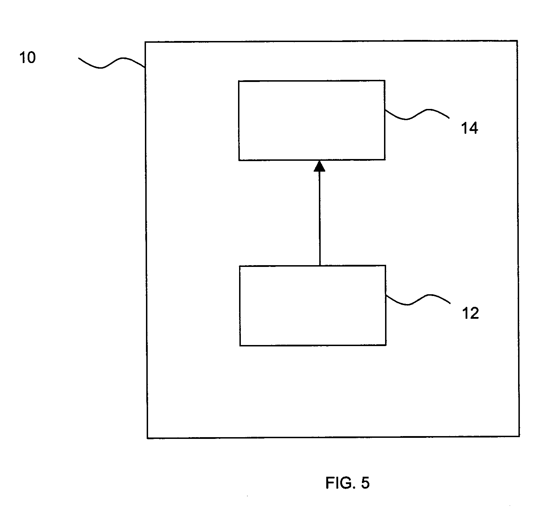

Fig. 5 shows a transceiver embodiment of the radio transceiver adaptation technique. The transceiver, denoted as 10, comprises at least one RF transmitter 12 and at least one RF receiver 14. The transceiver 10 is capable of operating in compliance with at least one radio communication standard. It is also capable to determine, when the RF transmitter 12 transmits a signal, an amount of signal power leakage from the RF transmitter 12 into the RF receiver 14. Further, the transceiver 10 is capable to adjust, when the RF transmitter 12 transmits in a specific frequency range, one or more parameters of the RF receiver 14 so as to fulfil, or obtain, a receiver requirement (e.g., a receiver performance) defined in the radio communication standard currently applicable to the transceiver 10, i.e., the radio standard according to which the transceiver 10 is currently operating. The adjustment is made at least partially based on the signal power leakage determined for the specific frequency range.

In most radio communication standards, the frequency spectrum is divided into a number of uplink bands for communication from a transceiver to the base station and downlink bands for communication from the base station to the transceiver. Each band may be divided into a number of channels. Typically, a channel can be everything ranging from approximately 200 kHz to approximately 20 MHz while depending on the type of communication (voice or data). The signal power leakage may be different from one TX channel to another; it may also be different from one frequency band to another. Thus, the term "frequency range" may include one or more frequency bands or one or more channels. It is also possible that dual, triple, or multiple channels may be used simultaneously in order to increase data rates. Hence, the term "frequency range" can also include such multiple channels.

The signal power leakage may be different from one frequency range to another. Therefore, in certain implementations it is preferable to determine the signal power leakage from each TX frequency range into the receiver and adjust the receiver to minimize the power consumption under each specific operating condition. In view of the above, the RF transmitter 12 of the transceiver 10 may be configured to transmit in a plurality of frequency ranges and the transceiver 10 may be configured to perform the determination and the adjustment with respect to each frequency range.

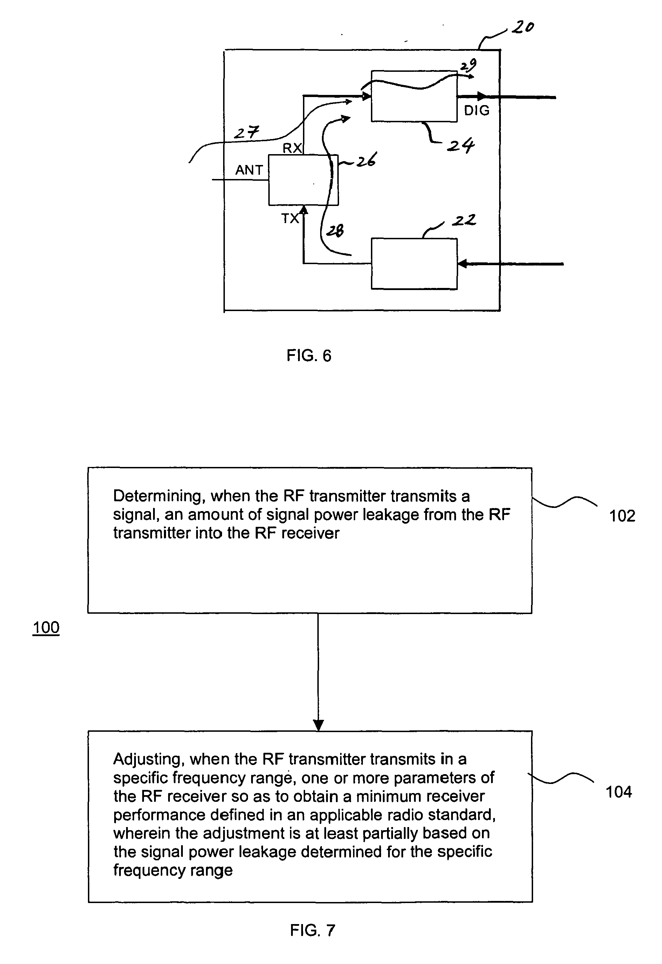

Fig. 6 shows another transceiver embodiment 20 of the transceiver adaptation technique. In this figure, the transceiver 20 comprises at least one transmitter 22, at least one receiver 24, and a duplex filter 26 in between. The duplex filter 26 may be a typical three-port duplex filter with one port connected to the transmitter 22, e.g., to the transmitting power amplifier (not shown in the figure), one port connected to an antenna (ANT), and one port connected to the RX chain input. The arrows indicate paths with frequency dependent attenuation and linearity subject to transceiver manufacturing variations. The first path, denoted as 27, indicates the ANT-to-RX loss of the duplex filter (that affects both the desired signals and interferers). The second path 28 denotes the TX-to-RX attenuation of the duplex filter and the third path, 29, indicates the transfer function through the receiver RX-to-DIG. The DIG in Fig. 6 denotes the output signal of the receiver going into a digital baseband processing component of the transceiver 20.

Along these paths are usually provided signal processing components, or blocks. For example, the RX-to-DIG path 29, or the receiver 24 itself, usually comprises at least one amplifier, one mixer, one filter, and one analogue-to-digital (A/D) converter. These signal processing components may feature manufacturing process dependent filtering, noise and linearity performance. These variations will influence the overall performance (e.g. signal-noise-ratio, bit error rate, etc.) of the receiver in different ways.

The attenuated TX signal arriving at the receiver input port is involved in setting the worst case linearity requirements of the receiver 24 as explained above. The attenuation, or isolation, that the duplex filter 26 provides between the TX and RX ports is therefore a key factor influencing the receiver linearity requirements and thereby its power consumption.

The worst case TX-to-RX attenuation may be specified in the product datasheet from the manufacturer (or subcontractor) of the duplex filter. It is typically about 40 dB, but it can vary from frequency band to frequency band. Furthermore, there is a significant performance spread due to uncertainties in the manufacturing process. In other words, the duplex TX-to-RX attenuation is subject to a manufacturing spread. (To be on the safe side it is common practice to assume the worst-case attenuation when designing the RX, even though the worst case rarely occurs in normal operation of the transceiver.) In order to guarantee certain attenuation, manufacturers typically adopt at least a 2-sigma margin, i.e. about 95% of the devices manufactured have an attenuation level equal to or better than the minimum specified rating.

The difference between the minimum specified performance and the typical performance can be as much as 4 dB. A significant number of duplex filters will perform even better than that. Typically, no maximum attenuation is specified.

Furthermore, the duplex filter performance in the center of the TX band is often considerably better than that at the band edge. The difference between the average attenuation on one TX channel and another can be up to 5-10 dB, depending on the duplex filter and TX channel bandwidth. This means that there is a high probability that the TX-to-RX attenuation of a randomly chosen TX band, TX channel, and duplex filter is significantly better than the guaranteed minimum, or specified minimum, e.g. provided by the manufacturer or subcontractor.

Usually, there is a manufacturing tolerance (e.g., from duplexer to duplexer, from one frequency range to another, etc.) in the duplexer attenuation which may be significant. Typical radio receivers are designed to work with the worst-case attenuation of a duplexer as advised in the duplexer data sheet. However, the radio communication standards, such as for example the 3GPP LTE specifications, are fixed. This means that, effectively, many radio receivers spend their lifetime operating with more power than necessary simply in order to meet the standard specifications.

The technique presented herein proposes that, among others, each radio receiver should examine its own TX-to-RX leakage (e.g., through the duplexer) and then determine the minimum power as well as other parameters needed to meet the worst-case specifications of an applicable radio standard. If the duplexer performs better than expected, the radio receiver (especially the RF front end) will need substantially less power to meet the specifications of a particular radio communication standard. That then becomes the maximum power consumption for that transceiver. If the TX-to-RX leakage is larger than expected, there is a chance to improve the yield by tuning the RF receiver to a higher power consumption.

Thus, from a certain perspective, the technique presented herein may be viewed as a background calibration technique where the measurements conducted are a kind of self-test that goes on, rarely, in the background and acts on TX signals emitted by the transceiver itself while it is communicating with a base station.

Corresponding to the transceiver embodiments described above, a method embodiment 100 for adjusting a transceiver is illustrated in Fig. 7. The transceiver, e.g., 10 shown in Fig. 5 or 20 in Fig. 6, comprises at least one RF transmitter, e.g., 12 as shown in Fig. 5 or 22 in Fig. 6, and at least one RF receiver, e.g., 14 as shown in Fig. 5 or 24 in Fig. 6; the transceiver 10 is capable of operating in compliance with at least one radio communication standard. The method embodiment 100 comprises two basic steps 102 and 104: at step 102, when the RF transmitter (12 or 22) transmits a signal, an amount of signal power leakage from the RF transmitter (12 or 22) into the RF receiver (14 or 24) is determined; at step 104, when the RF transmitter (12 or 22) transmits or is configured to transmit in a specific frequency range, one or more parameters of the RF receiver (14 or 24) are adjusted so as to fulfil a receiver requirement defined in an applicable radio communication standard; the adjustment is made at least partially based on the signal power leakage determined for the specific frequency range.

The intended result of the method according to the transceiver adaptation technique is a most relaxed setting for the different components of the RX receiver that will render a sufficient overall performance (e.g., noise, gain, linearity) of the RF receiver (in order to communicate as specified in an applicable radio communication standard). These taken together are usually referred to as the performance of the RF receiver. Among others, the method basically dictates the RF receiver's ability to detect weak desired signals in the presence of undesired signals, which may be at a different frequency range than the desired signals. The current consumption is the price paid for sufficiently high performance; e.g., sufficiently low noise, high gain for the desired signals, low gain for the undesired signals, and high linearity

For example, the power consumption of the receiver depends to large extent on the required linearity. Therefore, in the absence of the largest interferer (e.g., reduced power of the TX leakage) the RF receiver can meet linearity specifications (e.g., distortion, compression, inter-modulation, etc.) defined by the standard, with significantly reduced power consumption. Similarly, noise can also be considered as one of the requirements to be met in order to conform to receiver sensitivity specifications (e.g., the ability to detect a weak signal).

The receiver requirement denotes one or more parameters of the RF receiver which include the power consumption, the linearity, the noise level, the gain for an undesired signal, and the gain for a desired signal. Parameters of the RF receiver which may be affected by the adjustment step include linearity, noise, gain, and dynamic range, etc.

Among these parameters, gain is also known as amplification. In a linear system with gain, the amplitude of the output signal amplitude will be that of the input signal amplitudes multiplied by the amount of gain of the system. The gain may be different at different frequencies. The gain may be greater or equal or smaller than one; where a gain smaller than one may also be denoted as attenuation.

Noise is a random signal, usually with small amplitude, that results from the random movement of electrons in the conducting materials of electronic devices that make up the system. The amount of noise in the receiver sets a lower amplitude limit for signals that are detected by the receiver. Usually the smallest signal level is specified in radio standards. The amount of noise can be reduced by increasing the power consumption.

Linearity is a parameter which indicates the receiver's ability to handle strong signals. Problematic characteristics of a non-linear system are that its amplification, or gain, depends on the amplitude of the input signal, and that produces signals at more (different) frequencies than the ones that entered the system. In practice, most electronic systems, if not all, are non-linear to some extent. Fortunately, it is possible to design systems that are sufficiently linear for many applications. For example, it can be done at the expense of increased power consumption. Strong TX signals entering a (non-linear) receiver will compress the gain for the desired RX signal, and they can also pollute, or interfere, the RX channel with undesired signals that makes it impossible to amplify and detect the desired signals properly. The maximum level of different interfering signals is defined in the radio standards.

Dynamic Range (DR) is usually defined as the ratio between the power of the strongest signal that can enter the system without compressing its gain (e.g., by 1 dB) and the input referred noise power level. Typically, the dynamic range required can be 100 dB (i.e., 100000 times) or more. Since the desired signal (RX) and the strongest undesired signal (TX leakage) are at different frequencies (i.e., in different bands and/or channels) one may relax the DR requirement of the receiver by attenuating the undesired signal a bit (e.g., 40 to 50 dB) before it enters the receiver. Usually, this is the task of the duplex filter.

Step 102 for determining the signal leakage may be performed at different states of the transceiver. For instance, it may be performed upon manufacturing of the transceiver, in a self-test mode of the transceiver, or upon first use of the transceiver, i.e., at the first time the transmitter transmits in a certain frequency range where no determination has been carried out before.

In some implementations, the determination step 102 may be performed once either during manufacturing or upon first use. Although the main target is static variation, the determination may also be performed repeatedly. For instance, the signal power leakage may be repeatedly determined under different operating conditions of the transceiver; the signal power leakage may also be repeatedly determined over time. The repeated determination allows a more accurate estimate of the average signal leakage to be obtained, in the frequency range concerned which can better account for aging and temperature variations. The amount of the signal power leakage may be determined by measuring a power or amplitude of the leaking signal.

Step 104 for adjusting the receiver parameter(s) may be executed upon a change of the specific frequency range in which the RF transmitter transmits the signal. For instance, the adjustment may be executed every time the network decides to change the communication frequency range.

Accordingly, in one implementation variant, the determination step may be performed less frequently than the adjustment step. One such scenario is that the adjustment is executed every time the network decides to change communication frequency range while the determination (at least in a static scenario) only needs to be carried out one time per frequency range. Thus, data collection may take place when there is a receiver idle but the transmitter is active. The collected data may be stored for later use, e.g., upon adaptation when the receiver receives signals from the network in some specific frequency range. The adjustment may be performed based on the data collected once or at several occasions.

The adjustment may adjust, or relate to, or affect, various components of the RF receiver. These components include, inter alia, at least one of a low-noise amplifier, a mixer, a filter, and an analogue-to-digital converter. From another perspective, the adjustment may affect, or impact, at least one parameter of the RF receiver, such as linearity, noise, gain, and dynamic range.

The method embodiment 100 may further comprise storing, in a storage, e.g., of the transceiver, the signal power leakage determined at the determination step. The adjustment step may comprise adjusting one or more parameters of a receiver by looking up in the storage. The multi-frequency-range operation indicates the possibility of having already measured the performance (or TX leakage) of the transceiver under different operating conditions over time so that, eventually, the adjustment in any operating condition is just a matter of looking up the proper parameter values in a table (e.g., saved in memory).

Generally speaking, the method embodiment 100 may be performed to compensate for a manufacturing tolerance of the transceiver.

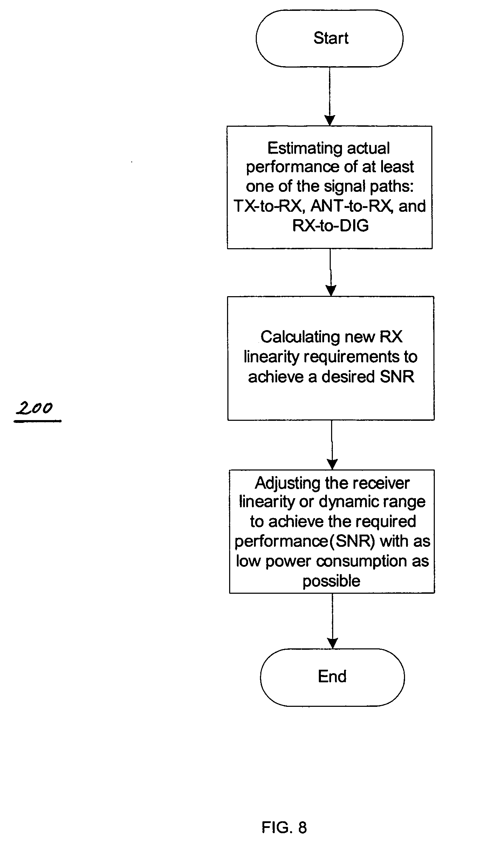

Another method embodiment of the receiver adaptation technique is shown in Fig. 8 as a flow chart. This method embodiment, denoted at 200, may apply to the transceiver embodiment illustrated in Fig. 6, which comprises, among others, a duplex filter. The method embodiment 200 will lower the power consumption for the transceiver when communicating in some frequency ranges where the duplex filter attenuation is better than average. It will also save power for devices which have a better duplex filter than the worst-case specified by a manufacturer or subcontractor.

One of the advantages offered by the method embodiment 200 is that for all TX bands, TX channels, and duplex filters, where the TX-to-RX attenuation is better than specified, the receiver linearity requirements and therefore power consumption can be reduced while still meeting the worst-case system requirements. Estimating the ANT-to-RX and RX-to-DIG performance can give additional benefit. For instance, both the ANT-to-RX and RX-to-DIG transfer are subject to manufacturing spread and differences between frequency ranges. So depending on the device and RX frequency range the same advantages as for TX-to-RX attenuation could be expected.

The method embodiment 200 comprises the following major steps:
(i) characterizing (at least approximately) the duplex filter and/or receiver performance, by directly or indirectly determining, or estimating, or measuring one or more of the following properties: the actual TX-to-RX attenuation in different TX channels, the actual ANT-to-RX loss in any set of frequency bands of interest, and the actual RX chain (RX-to-DIG) performance (whatever affecting the resulting SNR);
(ii) calculating receiver linearity requirements to achieve a desired SNR; and
(iii) adjusting the receiver linearity and/or noise figure to achieve the required performance with as low power consumption as possible.

Step (i) - (iii) may be repeated with some time interval to track performance drift, for example due to temperature variations.

Since there may be a large variation in the duplex filter attenuation for different frequency ranges and a manufacturing spread for duplex filters, the method embodiment 200 aims at determining the actual value of the leakage so as to find out the worst-case dynamic range required and adjust the components of the receiver accordingly. For example, one may adjust one or more parameters (e.g., linearity, noise, etc.) of one or more of the components of the receiver, and then the power consumption of the transceiver may drop. To give some perspective, 3dB dynamic range relaxation could lead to 50 percent reduction of power consumption in certain components.

The step for characterizing the duplexer and/or the receiver may be either direct or indirect. In both cases, a specific signal scenario, with signals at known amplitude and frequency, may be applied at the duplex filter's TX and/or ANT port. In direct methods the interfering and desired signals may be measured directly at the duplex filter's RX port to calculate the varying ANT-to-RX and TX-to-RX attenuation at the frequency ranges of interest, while in indirect methods the variations may be determined indirectly by measuring some other metric such as the bit-error rate (BER) or the SNR of the receiver output signal.

The measurements may be performed during factory manufacturing of the transceiver or during regular use of the transceiver. This leads to the four variants depicted in Table 1 below with subsequent detailed explanation. Depending on the specific technique used, it will be possible to adapt to variations in different parts of the RX chain.

**Table 1: Different RF Characterization Technique Embodiments and the Variations they Measure/Estimate**

| | Direct characterization | Indirect characterization |
|---|---|---|
| During regular use of the transceiver | TX-to-RX attenuation variations; | TX-to-RX attenuation variations; RX-to-DIG performance variations |
| During factory trimming of the transceiver | TX-to-RX attenuation variations; ANT-to-RX attenuation variations | TX-to-RX attenuation variations; ANT-to-RX attenuation variations; RX-to-DIG performance variations |

Fig. 1 refers to an external configuration. To calibrate for this case, factory measurements are needed where a known signal can be applied to the antenna and the ANT-to-RX loss is measured at many different frequency ranges. This would usually require a long testing time and high testing cost. Therefore, it is somewhat impractical and could be ignored. By ignoring the external interferers the case would become clearer such that the method does not intend to measure signals emitted from transmitters outside the transceiver in question (external interference in the radio environment).

The most important path to characterize is the TX-to-RX leakage from the RF transmitter connected to the same duplexer as the RX receiver. This means that the interference from a co-located transmitter in the transceiver (leaking signal through the antenna as shown in Fig. 2), may also be ignored. As a result, there is no need to characterize any part of the ANT-to-RX path or to measure any signal out of the air. Only internal TX-to-RX leakage needs to be considered.

Techniques 4a and 4b below focus on measurement of the TX-to-RX leakage in different paths between different parts within the transceiver.

The RX configuration will be adjusted to different duplex filter attenuations in different TX frequency ranges (bands and channels), as well as to losses in the media and interfaces transporting the TX signal from the TX output to the RX input.

### Technique 1 - Indirect characterization during factory trimming

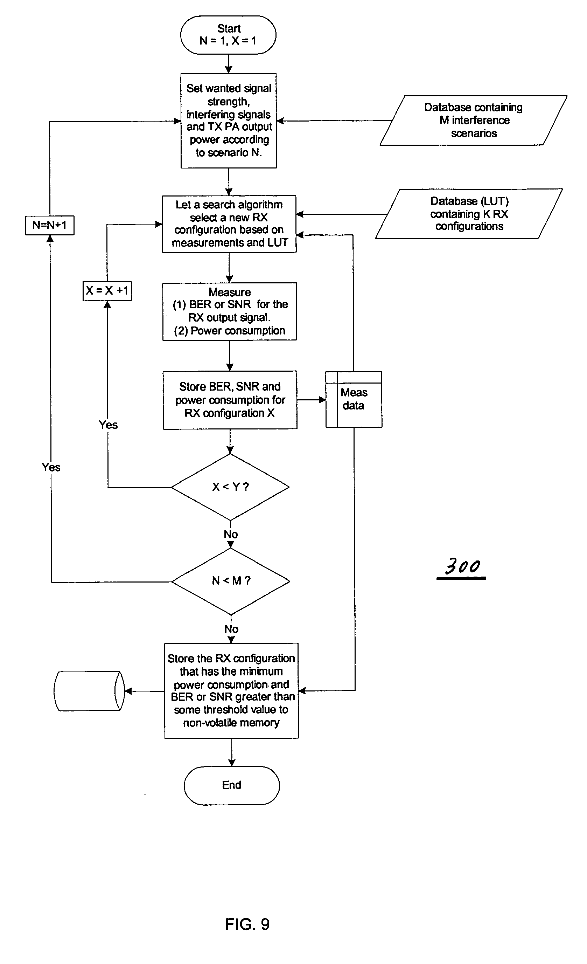

Fig. 9 is a flow-chart showing another method embodiment 300 of the transceiver adaptation technique which implements an indirect characterization / determination of the transceiver, e.g., during factory trimming of the transceiver. In the figure, M is the number of scenarios, Y is the number of RX configurations to test, and K is the number of available RX configurations.

During factory trimming of the transceiver it is possible to carefully control all input signals and also evaluate the digital output signal of the RX chain. Thus, it is possible to account for TX-to-RX, ANT-to-RX, and RX-to-DIG variations.

According to method embodiment 300, a set of M pre-defined worst case input signal scenarios (a weak desired signal and a set of strong interfering signals) are intentionally created by applying signals at the antenna input port and/or controlling the power output from the TX power amplifier (PA). Then, the digital output signal of the RX chain is captured and some metric of the received signal quality (e.g., SNR or BER) is calculated. Next, the receiver settings, determining both receiver performance and power consumption, are varied to find the minimum power consumption at which the duplex filter and the RX chain together provide sufficient performance for all input signal scenarios in the set.

If the number of RX configurations K is very large, an intelligent search algorithm may be applied to find the optimal configuration with sufficient BER in fewer iterations Y. Such an algorithm searches the configuration space and can find a setting close to optimum without actually testing through all configurations. That can save testing time. This test indirectly incorporates a characterization of the duplexer performance in all frequency bands where signals are applied.

The calculated receiver settings needed for acceptable bit error rate (BER) performance in the worst case scenario may be saved in a memory. These settings then define the maximum power that the receiver will consume.

### Technique 2 - Indirect characterization during regular use

An embodiment of the indirect characterization method described above may be employed during regular use of a transceiver. However, since it is not possible to control the desired signal strength and interference in this case, this method embodiment mainly targets the TX-to-RX attenuation.

In this method embodiment, the transceiver periodically takes readings over an extended period (days, weeks, or even months) and stores the results in a database. When the TX PA is operating at high power and a weak desired signal is being received (can be found from the RSSI), the BER, modulation scheme, PA output power, and RSSI is stored in a database along with any other relevant metrics like temperature, etc. Transceivers such as UEs which often operate in hard signal conditions will have their database completed faster. This is important since the database is needed more frequently in such UEs.

The information in this database may then be processed to estimate the duplex filter and RX-to-DIG performance in worst case conditions and decide if the existing control settings for the receiver can be changed to reduce the power consumption.

### Technique 3 - Direct measurement in factory

According to this method variant, a set of M pre-defined input signals (desired signals, and interfering signals) are intentionally created by applying signals at the antenna input port and/or controlling the TX PA output power.

An RF signal analyzer may be connected to the RX port of the duplex filter. The received power in the different frequency ranges of interest is measured and used to calculate the TX-to-RX and/or ANT-to-RX variations for each frequency range of interest.

### Technique 4a - Direct measurement during regular use - by using mRX chain

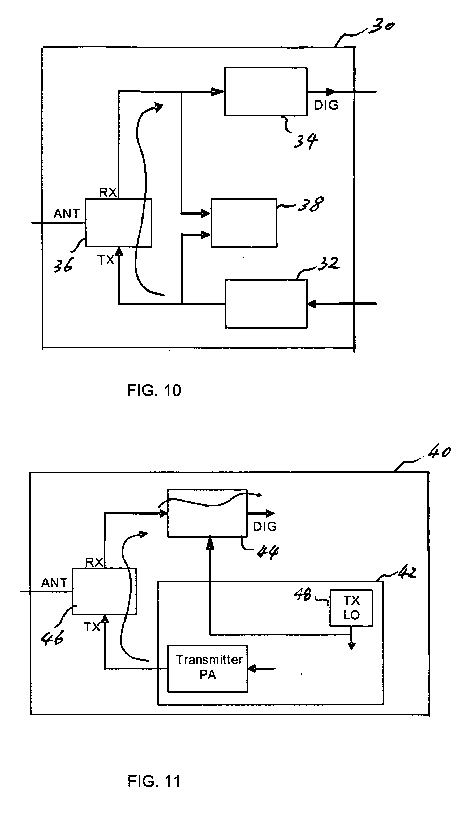

Fig. 10 shows a transceiver embodiment 30 employing a direct measurement during regular use of the transceiver. The transceiver 30 comprises at least one transmitter 32, at least one receiver 34, and a three-port duplex filter 36 in between. Among the three ports, one is connected to the transmitting power amplifier (PA), one to an antenna (ANT), and one to the RX chain input. The transceiver 30 comprises a further component, a measurement receiver (mRX) 38, which can be configured to measure the attenuated power at the input port of the RX chain in order to determine the TX-to-RX attenuation. A further function of the mRX 38 is to accurately control the actual output power from the TX in order to comply with strict spectrum emission requirements.

Such an mRX 38 can have more than one input, and the duplex filter output may therefore be used as one of the optional inputs to the mRX 38. Thus, the difference between the transmitted power and power of the TX signal at the RX port of the duplex filter 36 can then be measured accurately.

### Technique 4b - Direct measurement during regular use - by using RX chain

Fig. 11 shows a further transceiver embodiment 40 of the technique. Transceiver embodiment 40 comprises at least one transmitter 42, at least one receiver 44, and a three-port duplex filter 46 (similar to the transceiver 20 depicted in Fig. 6). A TX local oscillator 48 is arranged in the transmitter 42. The working principle of transceiver embodiment 40 is that the TX-to-RX attenuation and LNA attenuation of the duplex filter 46 are measured using the existing receiver chain within the RF mixer driven by the TX local oscillator 48.

As shown in Fig. 11, the attenuated power at the input port of the RX chain is measured using the RX chain itself, with the TX LO as frequency reference for the RX mixer. In contrast to the embodiment shown in Fig. 10, no measurement receiver is needed, but regular signal reception through the antenna port is not possible during the measurement. The gain value of the low-noise amplifier in the TX frequency range should also be known.

According to this embodiment, the TX signal will be down converted to base-band frequencies in the RX chain and the TX power can be measured by measuring the in band power of the digital RX output. This will also account for some receiver variations (parts implemented before the mixer, like for example the LNA gain).

Once the characterization of the duplex filter and the receiver is completed, the receiver linearity requirements need to be determined. The direct methods require some calculation to determining the receiver requirements. For example, the worst-case received power of different interfering signals will be determined from the characterization of at least one of the TX-to-RX, ANT-to-RX, and RX-to-DIG performance; then, the receiver linearity requirements need to be found based on the actual duplex filter and RX characteristics (e.g., in Techniques 4a and 4b above). In indirect methods, determining the RX configuration meeting linearity requirements with as little power as possible is part of the characterization, so no additional calculation is needed.

In the following it is explained how the receiver linearity requirements can affect the performance of the receiver, particularly the performance of the low noise amplifier (LNA) typically placed at the RX input.

Table 2 below shows the linearity and noise performance of a reconfigurable LNA for different settings of gain and bias current. The circuit was simulated in Cadence using a 65 nm CMOS process. From the table it is clear that different settings of gain and bias current result in significantly different LNA performance. Specifically, a higher gain is needed in order to achieve a lower noise figure, but increasing the gain results in a lower 1 dB compression point, which means that the circuit is less able to tolerate large input signals.

**Table 2: Simulated Noise and Linearity Performance of a Configurable LNA**

| | Bias Current (mA) | | |
|---|---|---|---|
| Gain_backoff | 1,44 | 3,71 | 7,16 |
| | 1-dB compression point (dBm) | | |
| 0 | -26.52 | -29.50 | -30.58 |
| 1 | -24.37 | -28.19 | -29.23 |
| 2 | -21.32 | -24.42 | -26.08 |
| 3 | -17.45 | -20.90 | -22.62 |
| 4 | -13.57 | -17.48 | -18.81 |
| 5 | -10.08 | -14.16 | -15.80 |

| Gain_backoff | Noise Figure (dB) | | |
|---|---|---|---|
| 0 | 2.038 | 1.494 | 1.349 |
| 1 | 2.094 | 1.525 | 1.373 |
| 2 | 2.200 | 1.583 | 1.417 |
| 3 | 2.351 | 1.667 | 1.481 |
| 4 | 2.543 | 1.776 | 1.564 |
| 5 | 2.769 | 1.906 | 1.665 |

The worst-case scenario from a receiver point of view is when the incoming wanted signal is weak while the transmitted signal from the transceiver is at its strongest level. In this case, the receiver must have a very low noise figure as well as very good linearity.

Table 2 also reveals that the linearity performance of the receiver is an obstacle to using the receiver in the mode with the lowest possible noise figure. If the TX signal is very strong, the receiver is forced to back-off from the maximum gain setting to improve linearity, causing the noise figure to increase significantly. As a result, it is preferable to design receivers to operate with a high bias current setting in order to minimize the performance loss with respect to the noise figure.

However, if the TX-to-RX attenuation provided by the duplex filter is better than the typical value given in the manufacturer's data sheet, the linearity requirements on the receiver can be relaxed. As a result, the receiver can operate with a high(er) gain setting resulting in a better noise figure even with a lower bias current.

The 4 dB spread between the minimum and typical performance of the duplexers can be quite significant for power saving in the transceiver's RF front end. For example, for the LNA performance shown in Table above, a 2 dB increase in duplexer performance means a relaxed compression point requirement by ~2 dB. As a result, the LNA can operate in the worst case conditions with only half the current consumption with a very small penalty to the noise figure.

Other parameters that may also be adapted to save power include the mixer and LO driver device size, VGA gain, channel select filter order and bias currents, ADC dynamic range and bias currents.

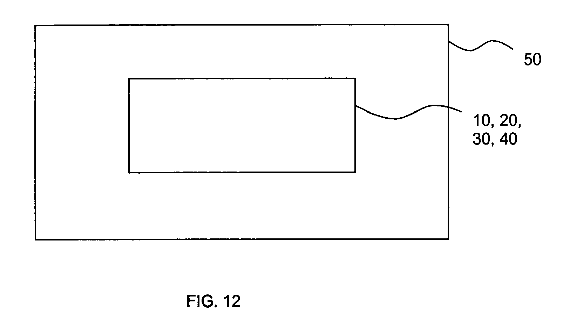

Fig. 12 is a block diagram showing a user equipment embodiment employing the transceiver adaptation technique presented here within. The user equipment, denoted 50, comprises the transceiver according to the technique, for example, the transceiver embodiment 10 or 20 illustrated in Figs. 5 and 6, respectively.

The technique presented herein may be implemented in the form of hardware, software, or as a combined hardware/software solution. As for a software aspect, a computer program product is provided which comprises program code portions for performing the steps of any of the methods and method aspects presented herein when the computer program product is executed on a computing device. The computer program product may be stored on a computer-readable recording medium. The computer-readable recording medium may be a permanent memory or a rewriteable memory, CD-ROM, or DVD. The computer program product may also be provided for download via a communication network such as the Internet, a cellular communication network, or a wireless or wired Local Area Network (LAN).

The transceiver adaptation technique presented herein present several technical advantages. Firstly, the technique enables power savings in the worst case scenario by taking the actual duplexer performance into account; secondly, the technique offers the possibility to avoid measurements in the factory (thereby saving cost); thirdly, when only static (or slowly varying) characteristics are considered, no measurement of the dynamic radio environment is necessary; fourthly, adaptive algorithm is employed to take advantage of the presence of better-than-average performance, if any, of one or more of the front end components; last but not least, the technique can be implemented in the base-band software, providing the possibility of updates in database processing routines.

In the foregoing, principles, embodiments and various modes of implementing the technique presented herein have been exemplarily described. However, the present invention should not be construed as limited to these particular principles, embodiments, and modes. Rather, it will be appreciated that variations and modifications may be effected by a person skilled in the art without departing from the scope of the preset invention as defined in the claims appended thereto.

## Claims

1. A method for adjusting a transceiver (10) comprising at least one radio frequency, RF, transmitter (12) and at least one RF receiver (14), the transceiver capable of operating in compliance with at least one radio communication standard, the method comprising the steps of:
determining, when the RF transmitter transmits a signal, an amount of signal power leakage from the RF transmitter into the RF receiver; and
adjusting, when the RF transmitter is configured to transmit in a specific frequency range, one or more parameters of the RF receiver so as to fulfil a receiver requirement defined in the radio communication standard, wherein the adjustment is at least partially based on the signal power leakage determined for the specific frequency range.

2. The method according to claim 1, wherein the receiver requirement denotes power consumption, linearity, noise level, gain for a desired signal, and gain for an undesired signal.

3. The method according to any one of the previous claims, wherein the RF transmitter is capable of transmitting in a plurality of frequency ranges and the determination and adjustment steps are performed with respect to each frequency range.

4. The method according to any one of the previous claims, wherein the transceiver further comprises a duplex filter having ports connected to the RF transmitter and the RF receiver, respectively, and wherein determining the signal power leakage further comprises determining a relationship between a first signal at the port of the duplex filter connected to the RF transmitter and a second signal at the port of the duplex filter connected to the RF receiver.

5. The method according to any one of the previous claims, wherein determining the signal power leakage further comprises using a transmitter local oscillator signal as a frequency reference for driving a mixer comprised in the RF receiver and measuring an in-band power of the signal at an output port of the RF receiver.

6. The method according to any one of the previous claims, further comprising storing in a storage the amount of the signal power leakage determined and wherein the adjustment comprises determining the one or more parameters of the RF receiver based on the stored amount of the signal power leakage.

7. The method according to any one of the previous claims, wherein the determination is performed when the RF receiver is in an idle state.

8. The method according to any one of the previous claims, wherein the determination is performed upon manufacturing, in a self-test mode or upon first use of the transceiver.

9. The method according to any one of the previous claims, wherein the adjustment is performed upon a change of the specific frequency range in which the RF transmitter is configured to transmit.

10. A computer program for adjusting a transceiver, comprising program code portions which when executed on a computing device cause the computing device to perform the method according to any one of the previous claims.

11. A transceiver (10) comprising at least one radio frequency, RF, transmitter (12) and at least one RF receiver (14), the transceiver capable of operating in compliance with at least one radio communication standard, wherein the transceiver is configured to:
determine, when the RF transmitter transmits a signal, an amount of signal power leakage from the RF transmitter into the RF receiver; and
adjust, when the RF transmitter is configured to transmit in a specific frequency range, one or more parameters of the RF receiver so as to fulfil a receiver requirement defined in the radio communication standard, wherein the adjustment is at least partially based on the signal power leakage determined for the specific frequency range.

12. The transceiver according to claim 11, wherein the RF transmitter is capable of transmitting in a plurality of frequency ranges and the transceiver is further configured to perform the determination and adjustment steps with respect to each frequency range.

13. The transceiver according to claim 11 or 12, further comprising a duplex filter having ports connected to the RF transmitter and the RF receiver, respectively,
wherein the transceiver is further configured to determine the signal power leakage by determining a relationship between a first signal at the port of the duplex filter connected to the RF transmitter and a second signal at the port of the duplex filter connected to the RF receiver.

14. The transceiver according to any one of claims 11 to 13, further comprising a measurement receiver, mRX, configured to determine the signal power leakage.

15. The transceiver according to any one of claims 11 to 14, wherein the RF receiver comprises at least one of a low-noise amplifier, a mixer, a filter, and an analogue-to-digital converter, and
wherein the transceiver is further configured to perform the adjustment by adjusting the at least one of the low-noise amplifier, the mixer, the filter, and the analogue-to-digital converter.

16. A user equipment comprising the transceiver according to any one of claims 11 to 15.

## Amended claims

### Amended claims in accordance with Rule 137(2) EPC.

**1.** A method for adjusting a transceiver (10) comprising at least one radio frequency, RF, transmitter (12) and at least one RF receiver (14), the transceiver capable of operating in compliance with at least one radio communication standard, the method comprising the steps of:
determining, when the RF transmitter transmits a signal, an amount of signal power leakage from the RF transmitter into the RF receiver; and
**characterized by**
adjusting, when the RF transmitter is configured to transmit in a specific frequency range, one or more parameters of the RF receiver so as to fulfil a receiver requirement defined in the radio communication standard, wherein the adjustment is at least partially based on the signal power leakage determined for the specific frequency range, and wherein the receiver requirement represents a performance requirement that denotes one of a minimum power consumption, a minimum receiver linearity, a minimum noise level, a maximum gain for an undesired signal, or a minimum gain for a desired signal defined in the radio communication standard.

**2.** The method according to claim 1, wherein the RF transmitter is capable of transmitting in a plurality of frequency ranges and the determination and adjustment steps are performed with respect to each frequency range.

**3.** The method according to any one of the previous claims, wherein the transceiver further comprises a duplex filter having ports connected to the RF transmitter and the RF receiver, respectively, and wherein determining the signal power leakage further comprises determining a relationship between a first signal at the port of the duplex filter connected to the RF transmitter and a second signal at the port of the duplex filter connected to the RF receiver.

**4.** The method according to any one of the previous claims, wherein determining the signal power leakage further comprises using a transmitter local oscillator signal as a frequency reference for driving a mixer comprised in the RF receiver and measuring an in-band power of the signal at an output port of the RF receiver.

**5.** The method according to any one of the previous claims, further comprising storing in a storage the amount of the signal power leakage determined and wherein the adjustment comprises determining the one or more parameters of the RF receiver based on the stored amount of the signal power leakage.

**6.** The method according to any one of the previous claims, wherein the determination is performed when the RF receiver is in an idle state.

**7.** The method according to any one of the previous claims, wherein the determination is performed upon manufacturing, in a self-test mode or upon first use of the transceiver.

**8.** The method according to any one of the previous claims, wherein the adjustment is performed upon a change of the specific frequency range in which the RF transmitter is configured to transmit.

**9.** A computer program for adjusting a transceiver, comprising program code portions which when executed on a computing device cause the computing device to perform the method according to any one of the previous claims.

**10.** A transceiver (10) comprising at least one radio frequency, RF, transmitter (12) and at least one RF receiver (14), the transceiver capable of operating in compliance with at least one radio communication standard, wherein the transceiver is configured to:
determine, when the RF transmitter transmits a signal, an amount of signal power leakage from the RF transmitter into the RF receiver; and
**characterized by**
adjust, when the RF transmitter is configured to transmit in a specific frequency range, one or more parameters of the RF receiver so as to fulfil a receiver requirement defined in the radio communication standard, wherein the adjustment is at least partially based on the signal power leakage determined for the specific frequency range, and wherein the receiver requirement represents a performance requirement that denotes one of a minimum power consumption, a minimum receiver linearity, a minimum noise level, a maximum gain for an undesired signal, or a minimum gain for a desired signal defined in the radio communication standard.

**11.** The transceiver according to claim 10, wherein the RF transmitter is capable of transmitting in a plurality of frequency ranges and the transceiver is further configured to perform the determination and adjustment steps with respect to each frequency range.

**12.** The transceiver according to claim 10 or 11, further comprising a duplex filter having ports connected to the RF transmitter and the RF receiver, respectively,
wherein the transceiver is further configured to determine the signal power leakage by determining a relationship between a first signal at the port of the duplex filter connected to the RF transmitter and a second signal at the port of the duplex filter connected to the RF receiver.

**13.** The transceiver according to any one of claims 10 to 12, further comprising a measurement receiver, mRX, configured to determine the signal power leakage.

**14.** The transceiver according to any one of claims 10 to 13, wherein the RF receiver comprises at least one of a low-noise amplifier, a mixer, a filter, and an analogue-to-digital converter, and
wherein the transceiver is further configured to perform the adjustment by adjusting the at least one of the low-noise amplifier, the mixer, the filter, and the analogue-to-digital converter.

**15.** A user equipment comprising the transceiver according to any one of claims 10 to 14.
